# EUROPEAN PATENT SPECIFICATION

(11) **EP 0 919 490 B1**
(45) Date of publication and mention of the grant of the patent: **02.07.2003**
(21) Application number: 98500255.9
(22) Date of filing: 24.11.1998
(51) Int. Cl.: B65D 85/00, B65D 88/52, B62B 3/02

(54) **Folding Container**
Faltbehälter
Récipient pliable

(30) Priority: 25.11.1997 ES 9702461; 07.10.1998 ES 9802080
(43) Date of publication of application: 02.06.1999
(73) Proprietor: Euroecoenvase, S.L., 21430 La Redondela (Huelva) (ES)
(72) Inventor: Garcia Legaz, Juan, 30333 Cuevas de Reyllo (Murcia) (ES); Martin Alfonseca, Francisco, 21430 La Redondela (Huelva) (ES)
(74) Representative: Davila Baz, Angel

(56) References cited:
- EP-A- 0 537 433
- FR-A- 2 521 425
- US-A- 2 645 538
- US-A- 4 249 749
- US-A- 5 033 758

## Description

The present invention refers to a folding and reusable container, especially conceived for products in bulk, provided with supporting wheels to facilitate its movement, and which may change from a mounted position, with great loading capacity to a folded position in which its volume is considerably reduced.

Folding containers for the described purpose are already known, which include a platform with or without supporting wheels, and walls which articulate or connect to said platform and which are capable of occupying a mounted position, in which they are placed perpendicular to the platform, delimiting a chamber or cavity capable of being filled with the product to be transported, and a folding position, in which the walls remain collapsed and superposed on the platform, or else folded and separated from the same.

US-A-5 033 758 discloses a container substantially in accordance with the preamble of claim 1 of this patent.

In any case, the container delimits a hollow or enclosure which is filled with the product to be transported, laying units over other units in such a manner, that this type of containers cannot be used for the transportation of delicate articles, such as specific types of fruit, the transportation of which must be carried out on individual trays on which one or two layers of products can be placed.

The object of the present invention is to solve the problems pointed out, by means of a container of great capacity, which permits the transportation of delicate articles, without risk of deterioration, and which serves for the transportation and storage of the products contained and also as exhibitor of the same, in such a way, that once the container has been loaded, it is not necessary to handle or touch the product again, until its final shipment or sale.

More precisely, the problems pointed out are solved by the features defined in claim 1. Further, preferred embodiments of the invention are defined in dependent claims 2-9.

Additionally, the container of the invention is provided with wheels, so that it facilitates its movement over storehouses and selling surfaces.

An added advantage of the invention is that both the folding and the mounting operations can be performed in a highly simple and rapid manner.

The container of the invention is constituted by a highly resistant folding structure, comprised for example of steel, making it reusable and capable of being subjected to any type of cleaning operations, to ensure its hygienic conditions.

The container of the invention is comprised of two equal, parallel and superposed frames, an upper and a lower one, consisting of metallic profiles, preferably in "U" cross section, confronted on the two frames. These two frames are related by at least one pair of folding arms, preferably constituted by flat structured elements in the form of scissors, made up of a pair of articulated flat bars, one of them at the end of each pair of flat bars being articulated at its free end to the adjacent side of the corresponding frame, whilst the other is slidable along the section of said frame. Said scissors permitting the relative movement of the frames between maximum and minimum separation positions.

Each pair of scissors shall be coplanar to each other, and the container may include one or more pairs of said scissors, each one of them corresponding with two of the opposite sides of the frames. The frames may also be provided with crosspieces coinciding at their axis, also comprised by confronted "U" shaped profiles, between which at least one pair of folding arms may be assembled, constituted by scissors of equal constitution as those described.

The receptacle also includes at least two stiff mounting columns, which are articulated at an end to the upper frame, according to parallel axes, aligned in twos, which shall permit the tilting of said columns between a collapsible top position on the frame and a vertical mounting position, with which it shall bear on the lower frame and ensure the assembly stability with the frame at the maximum separation position. Said columns shall be preferably comprised of two telescopic sections, including anchorage means for its attachment on the extended position of the container mounting. Additionally, the end section of each pair of columns with aligned articulation axes are related to each other by means of at least one crosspiece which runs between the free ends of the section, said crosspiece bearing on the parallel profile of the lower frame in the vertical mounted position.

Finally, the receptacle is completed with a series of detachable intermediate trays which are assembled at different heights between each pair of folding arms. For this, said arms shall be provided with isolated or continuous anchorage, on which the trays shall lie, the height of the same being able to be selected and of occupying a horizontal or inclined position for respective transportation and exposition situations.

The lower frame carries supporting wheels and is also assembled with diverse flat structures along the length of the sides parallel to the articulation axes of the mounting columns, said structures being vertically moveable as regards said frame, between an upper position, where they remain placed over the wheel supporting surfaces, and a lower position where they are placed on the floor, on the same plane as the wheels, receiving from the top, the support of the stiff mounting columns. In this second position, said flat structures act as supporting elements on the floor, preventing the accidental movement of the container.

In accordance to a preferred embodiment of the present invention, the columns which relate the two frames include a lower section with shorter height, and an upper telescopic post. The lower section, of tubular configuration, is attached to the lower frame. The telescopic post articulates with the lower section according to an axis, parallel to one of the frame side. The post may tilt around said axis, between a mounted position, at which it remains as an extension of the lower section, and a folded position, where it remains collapsed towards the interior of the mountings, in approximately parallel position to one of the frame sides.

The posts shall be provided with a lever assembly which shall permit the simultaneous activation on the post or the posts on one and the other side, so as to change from the folded position to the mounted position and viceversa, and also to control the relative position between the two sections of the telescopic post, permitting their placement in positions of maximum or minimum length.

The upper frame of the container is dismountable. To achieve this, the internal section of the telescopic post of the four columns and the upper frame are provided with coupling confronted elements, by means of which a rapid and safe attachment system is obtained.

According to another characteristic of the invention, the folding arms are provided in their interior with profiles placed at different heights, all of them equal, which delimit guides for the assembly of the trays by sliding.

On the lower section of the columns a leg is telescopically coupled, as from the lower end of said sections, which is pushed in ascending direction towards a retracted position by means of a spring assembled on said section and leg. On the upper end of this leg the associated post rests, both in the mounted assembly position and in the folded position. In this manner, when the weight transmitted by the post overcomes the force of the spring, the telescopic legs descend, bearing the lower end on the floor to serve as braking element. For this, said legs shall be equipped at the lower end with a wedge or supporting element of appropriate nature.

According to a variation, each leg may be equipped with an individual brake, activated from the outside.

The described characteristics, as well as others which belong to the invention and the advantages derived from the same, may be better understood from the following description, made with reference to the enclosed drawings, in which a possible form of embodiment is shown, offered as non limitative example.

In the drawings:
Figure 1 is a perspective view of a container, constituted according to the invention, shown in mounted position.
Figure 2 is a simplified perspective view of the same container in folded position.
Figure 3 represents an elevational view of how the container would be constituted with a pair of folding arms and a pair of columns.
Figures 4 and 5 correspond to detail A of figure 1, from a different angle and with the mounting columns in different positions.
Figure 6 is a partial perspective view of the lower container frame.
Figure 7 is a front elevational view of a container constituted according to a second type of invention, in mounted and partially unfolded position.
Figure 8 is a side elevational view of the container of figure 7.
Figure 9 is a partial side elevational view of the container, alike to figure 8, showing the columns in totally collapsed position.
Figure 10 is a side elevational view of the lower part of the container, including the lower frame, lower section of the columns and braking assembly.
Figure 11 shows a perspective view of the connection between the telescopic post and the lower section of each column.
Figure 12 shows an axial section of a braking and supporting system for the individualised activation by corners.

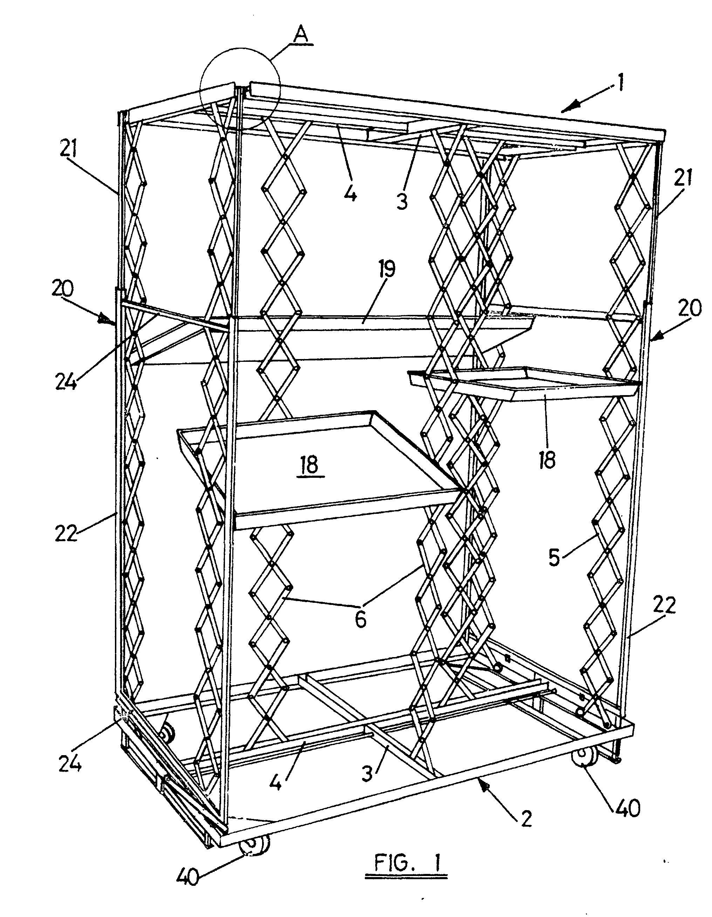

The container represented in figure 1 is constituted by two equal, parallel and superposed frames, one upper frame referenced with number 1, and the other lower frame referenced with number 2.

Preferably, said frames shall be of rectangular contour and may be crossed by transversal 3 and longitudinal 4 central bars. Frames 1 and 2 are related by pairs of folding arms made up of scissors 5, assembled between opposite sides of frames 1 and 2, also capable of including intermediate scissors 6 assembled between the idler bars 3 and 4 of the two frames.

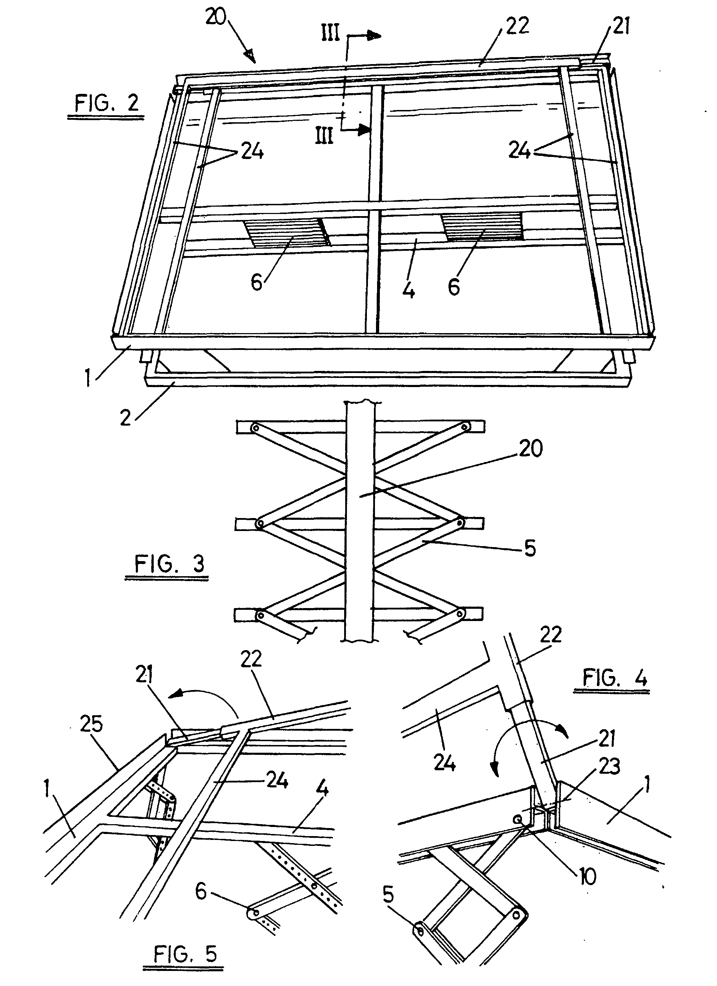

The folding arms or scissors 5 and 6 permit the relative movement of frames 1 and 2 between positions of maximum separation or mounting, shown in figure 1 or of minimum separation or folding, shown in figure 2.

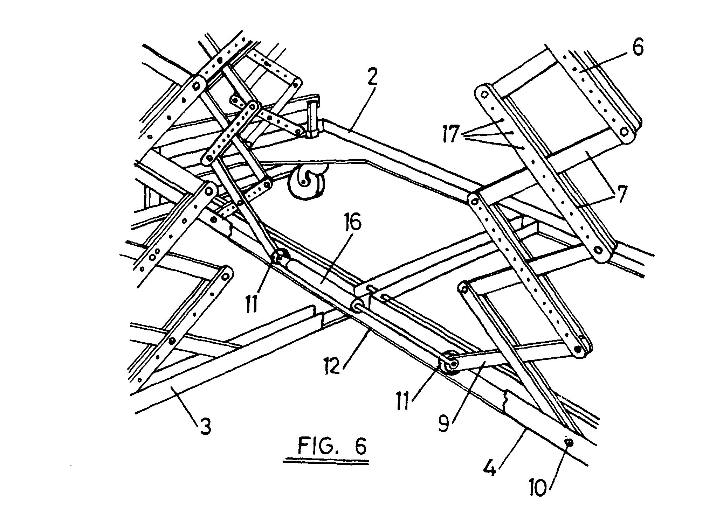

Scissors 6 are of traditional constitution, as can be better observed from figure 6, based on a pair of flat bars 7 which articulate with each other on their central part and consecutively at their ends. From the two upper and lower end flat bars 8 and 9 of each scissors, one of them is related to the corresponding side of the adjacent frame by means of an articulation axis 10, whilst the other flat bar 9 is provided at its free end with a rolling element which may move along a section of the frame.

Preferably, the upper and lower frames and the idler bars 3 and 4 are constituted based on confronted "U" shaped profiles, the rolling element 11 bearing on the profile bottom 12, whilst axis 10 perpendicularly crosses walls 13 of the profiles.

The pairs of scissors, at least the coplanar ones 5, shall be related by their ends by means of pneumatic springs 14, figure 6, preferably connecting with the rolling elements 11, which shall impulse the scissors towards their unfolded position to facilitate the mounting of the container.

As can also be appreciated from figure 6, the flat bars 7 of the scissors are provided with orifices or anchorage 17 on which hooks or profiles may be attached for the assembly of trays 18 and 19. If no intermediate scissors 6 exist, said trays shall be of equal length to the frames 1 and 2 and of equal width or half the width of said frames. If intermediate scissors 6 exist, they may be placed in such a manner that all the trays have the same dimension, corresponding to a quarter of frames 1 and 2, such as the trays referenced with number 18, or may also include trays such as those referenced with number 19, which approximately correspond in their dimension to double that of trays 18.

The mounted position of the container shown in figure 1, is ensured by means of stiff columns 20 which are articulated by their upper end to upper frame 1 and bear at their lower part on frame 2. Said columns shall be preferably made up of two telescopic sections 21 and 22 provided with anchorage pins or clips in the extended position shown in figure 1. As may be better appreciated from figure 4, columns 20 articulate through section 21 with the upper frame 1 by means of parallel rotation axis 23, which are aligned in twos.

External sections 22 corresponding to columns with aligned articulation axis are related to each other by means of crosspieces 24. The upper frame 1 is provided, at the articulation corners of columns 20, with notches, figure 4, which permit the turning of said columns from an upper collapsed position on the frame, shown in figure 2, and a vertical position shown in figure 1, as may be observed in figure 3.

Logically, the telescopic structure of columns 20 shall be necessary when the maximum height of the container may exceed the length of frames 1 and 2.

The nature both of the upper frames 1 and 2 and crosspieces 3 and 4 and scissors 5 and 6 may be metallic, for example of stainless steel. The trays 18 may be of any plastic material or of steel rods.

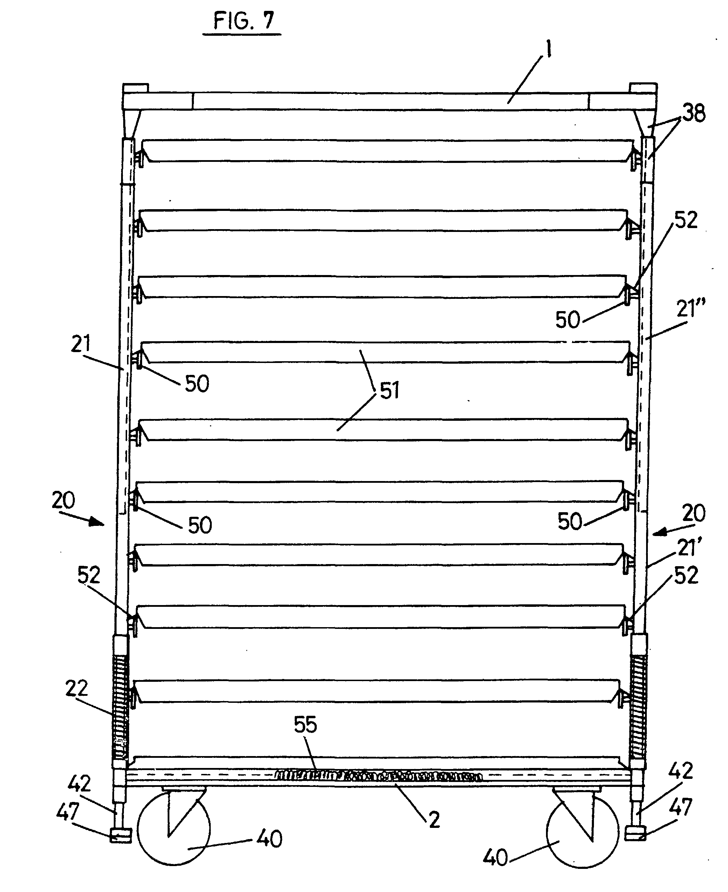

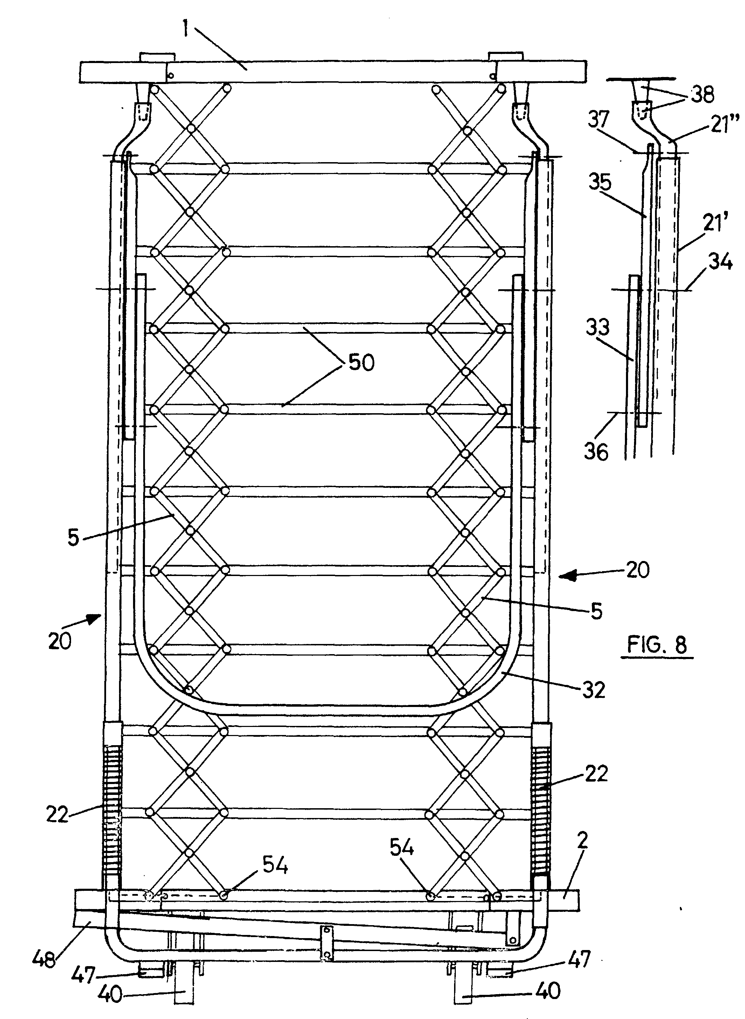

The container shown in figure 7 and 8 are equally constituted by two parallel and appreciably equal frames, an upper one referenced with number 1 and another lower one referenced with number 2, which are related by means of at least two pairs of folding arms, in the manner of flat structured scissors, the two pairs of folding arms 3 remaining placed in correspondence with two of the opposite sides of frames 1 and 2, for their connection to the same. The container is completed with four columns which are generally referenced with number 20.

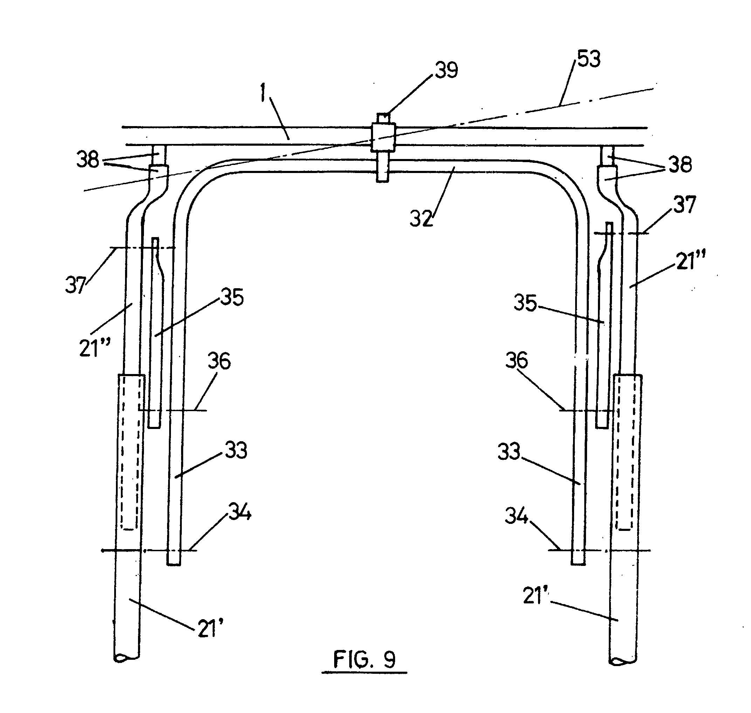

In accordance with this solution, each one of the columns 20 is made up of a lower tubular section 22 and of an upper telescopic post 21. As may be better observed from figure 9, the upper telescopic post is comprised of an external section 21' and an internal section 21'', telescopically fitted together.

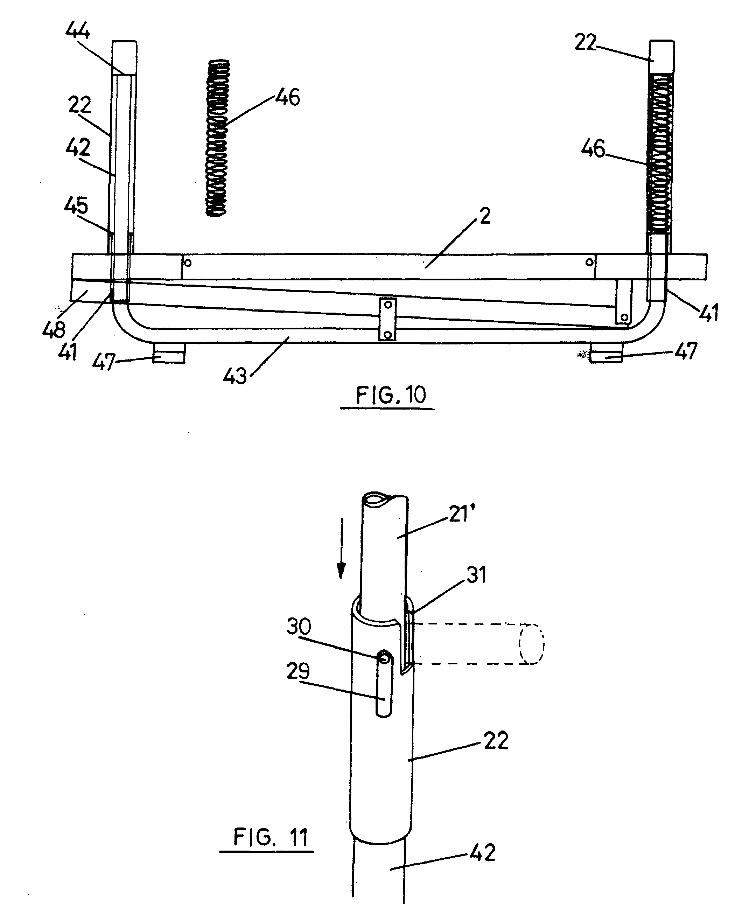

As can be observed in figure 11, the lower tubular section 22 of each column receives the lower portion of the telescopic post external section 21', both components related by means of a pin 30 which acts as articulation axis. The tubular section 22 is provided with two diametrically opposite axial grooves, along the length of which, pin 30 can move. Furthermore, tubular section 22 is provided as from the upper edge, with a notch 31 of equal width or slightly larger than the diameter of the external section 21' of telescopic post 21.

With this constitution, when the telescopic post 21 moves in ascending direction, in such a way, that pin 30 reaches the top limit of grooves 29, the post can collapse until it occupies the position represented by means of dotted lines in figure 11.

On the contrary, when the post moves in descending direction, together with articulation pin 30 along grooves 29, the rotation of section 21' and post 21 shall be prevented as regards the lower tubular section 22 of the columns.

The two posts 20 which are coplanar with each pair of folding arms 5 are related to each other, as can be better observed from figures 8 and 9, by a "C" shaped lever 32. This lever is articulated by the end of its side branches 33 to external section 21' of the telescopic post, by means of corresponding aligned axes 34. Additionally, the side branches 33 of this lever 32 is related with adjacent telescopic post internal section 21'' by means of an arm 35 which is articulated at an end by means of axis 36 to branch 33, whilst on the opposite end it articulates, by means of an axis 37 with the post internal section 21''.

With the constitution described, when lever 32 is collapsed in descending direction, such as is represented in figure 8, the telescopic posts internal section 21'' is to be found in the maximum retracted position. On the contrary, when lever 32 is rotated in ascending direction, until it occupies the position represented in figure 9, the posts internal section 21'' is to be found in its most extracted position, columns 20 reaching with this, the maximum height.

Internal section 21'' of telescopic posts and the upper frame 1 are provided with coupling and dismountable confronted connectors 38, in such a manner, that the upper frame 1 can separate from columns 20.

The top frame 1 is provided with a hook or clamp 39, figure 9, to attach to lever 32 in its highest position, thus ensuring the maximum height of the container.

The lower frame 2 is provided with wheels 40.

The lower section 22 of the columns is attached perpendicular to frame 2, such as is observed in figures 7, 8 and 10. A coaxial bushing 41 crosses frame 2 to receive at its bottom part, a leg, both legs coupled to sections 22, coplanar with each pair of folding arms 5 being capable of remaining joined by a lower bar 43, adopting an inverted "C" shaped configuration. Legs 42 are finished off with an upper stop 44, with a compression spring 46 being assembled between the same and a lower support 45, which impulses legs 42 in ascending direction.

On the upper stop 44 shall bear the corresponding telescopic post external section 21', in such a manner that when the weight transmitted by said post to legs 42 reaches a certain value, it overcomes the stress of spring 46, producing the descent of said legs until they bear on the floor through braking shoes 47.

The assembly of legs 42 with the lower bar 43 and shoes 47 can be made to descend by acting on lever 48.

Every two posts 21 of the columns related by means of lever 32, can be jointly collapsed.

Under said conditions, in order to fold the container, it is necessary to start by collapsing lever 32 in descending direction, as from the position represented in figure 9, once hook 39 has been released, until it occupies the position represented in figure 8. In this situation, frame 1 is dismounted, disconnecting at the top, folding arms 5 and the folding of the same in descending direction is proceeded with. Next, the posts 21 of the columns are collapsed by pairs, towards the interior of the container, in such a way, that two or more containers can be laid-up with each other, the movement of legs 42 in descending direction also being possible in this position, until shoes 47 bear on the floor.

As can be observed in figures 7 and 8, the pairs of folding arms 5 carry internal bars or profiles 50, placed at equal height on the two opposite pairs of arms. These bars or profiles determine guides for the assembly of trays 51 by sliding, which may be provided at their sides with wings 52 formed to couple on the bars or profiles 50.

Returning to figure 9, arms 35 belonging to each pair of posts related by lever 32, may be of different lengths, so that all the trays, as well as the top frame 1, run with a certain inclination, represented by the discontinuous line 53. In this manner, the trays 51 remain inclined, in descending direction, towards the front, to facilitate the exposition of the contained products.

With the purpose of carrying out the container unfolding operation without great efforts, the lower sliding end 54 of the opposed scissors are related to each other by means of a tensile spring 55, figure 7 and 8.

Although, throughout this Specification examples have been given with a minimum of four folding arms 5 and four columns 20, the container can be equally carried out with two folding arms 5 and two columns 20, in which case, the arrangement of each side would be the one represented in figure 3.

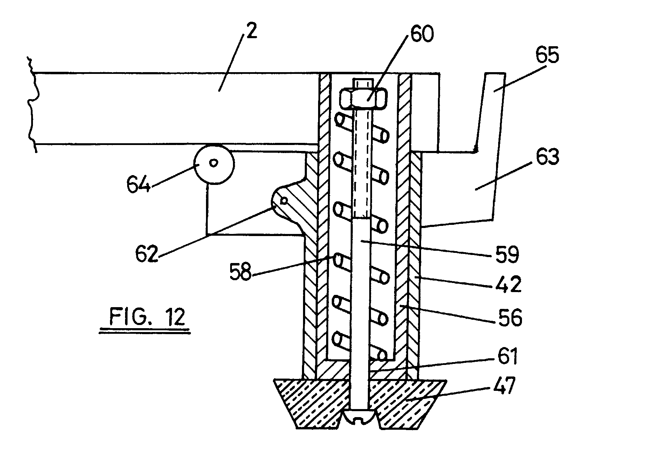

Finally, and as regards figure 12, a variation of the brake-support can be observed, which in this case, operates in individual form for each corner of the container, and as can be observed, is constituted by one leg 42 provided at its end with a brake shoe and a support 47 and which is assembled in axially moveable form, inside a tubing 56 which is joined forming integral part with the lower frame 2. Said leg 42 is constantly pushed towards the inside by spring 58 assembled around screw 59 between nut 60 of the same and the bottom 61 of the tubing 56. Leg 42 is provided with a lug 62 on which lever 63 is assembled with rotational possibilities and is provided at its free end with a slid 64 which facilitates its displacement over the lower frame 2 when the other end 65 of lever 63 is activated.

## Claims

1. Folding container, comprising:
two equal, parallel and superposed frames (1, 2);
at least one pair of folding arms (5) which relate said frames; and
at least two stiff mounting columns (20);
wherein
the folding arms (5) consist of flat structured elements in the shape of scissors, based on a pair of articulated flat bars, said flat structured elements permitting the relative movement of the frames (1, 2) from positions of maximum and minimum separation; and
the stiff mounting columns (20) are made up of at least two telescopic sections (21, 22) which are articulated at an end to the lower frame (2) according to aligned parallel axes which permit the tilting of said columns (20) between a top collapsed position on the upper frame (1) and a vertical mounted position, in which they bear on said lower frame (2) ensuring the stability of the assembly with the frames (1, 2) in the maximum separation situation;
**characterised in that** it further comprises
a series of intermediate detachable trays (18, 51), assembled at different heights between each pair of folding arms (5);
and **in that**
one of each pair of end flat bars is articulated by its free end to the adjacent frame, whilst the other is slidable along the length of a section of said frame.

2. Container according to claim 1, **characterised in that** it also includes pairs of folding arms (6) which are assembled between upper and lower crosspieces (3, 4) of the frames (1, 2), said crosspieces (3, 4) being constituted by confronted "U" shaped profiles which run according to the axes of said frames (1, 2).

3. Container according to claim 1, **characterised in that** columns (20) include a lower reduced height section (22), which is attached by its lower end to frame (2), and an upper telescopic post (21'), which is articulated to the lower section (22) by an axis (30) parallel to one of the frame (2) sides, around the axis (30) of which, it may tilt between a mounted position, at which it remains as an extension of the lower section (22), and a folded position, at which it is collapsed towards the inside of the mounting in approximately parallel position to one of the frame (1, 2) sides; both sections (21', 22) of telescopic posts (20) being related by a set of levers which control the relative position of said sections and the top section (21') of each post (20) being provided at its top free end and the top frame, with confronted mutual coupling elements.

4. Container according to claim 3, **characterised in that** the posts (20) are associated in two pairs, the set of levers which relate the sections of said posts including a "U" shaped lever (32), the side branches of which articulate by their free end to the external section of each pair of associated posts (20), and a bar (35) which articulates by an end to an intermediate point of one of the side branches of the "U" shaped lever (32) and by the other, to the internal section of adjacent telescopic post (20); the bars (35) on the same side of the two pairs of posts (20), being of greater length than those of the opposite side, so as to raise, in each pair of posts (20), the internal sections in different magnitudes.

5. Container according to claim 3, **characterised in that** the lower section (22) of the columns (20) is of tubular configuration, with sufficient diameter to receive the lower portion of the corresponding post (21'), both elements being related by a diametrical pin (30) which acts as rotational axis of the post (21') and may move along the length of respective axial grooves (29) which the tubular section presents on its wall, the wall of said lower section (22) being also provided, as from the top edge, of an axial notch (31) of approximately equal width or slightly larger than the diameter of post (21'), to permit the collapse of said mast.

6. Container according to claim 3, **characterised in that** each pair of coplanar folding arms (5) are internally provided with transversal profiles (50), placed at equal height on the two pairs of arms (5), to determine guides for the assembly of trays (51).

7. Container according to claim 3, **characterised in that** the confronted folding arms (5) are related by a tensile element (46) housed on the intermediate side of lower frame (2), which impulses said arms (5) towards its unfolded position.

8. Container according to claim 3, **characterised in that** on the lower section of the columns (20) are telescopically fitted together, parting from their lower end, a leg (42) which is pushed in ascending direction, towards a retracted position by means of a spring assembled between said section and leg, the associated post (5) resting on said leg (42)

9. Container according to claims 1 and 3 **characterised in that** it is provided, at each corner of the base, with a brake-support of individual activation, constituted by a tubing (56) forming integral part with frame (2), on which a second tubing (42) is telescopically assembled, provided with a projection (61) on which an elbowed lever (63) is rotationally assembled, finished off at its end by a slide (64) which bears and moves on the frame of base (2), the support foot (47) being constantly pushed towards its top position by means of a spring (58) assembled between the lower part (61) of the tubing (56) and the nut (60) of the screw (59) which attaches the support foot (47).

## Patentansprüche

1. Faltcontainer, enthaltend zwei gleiche, parallele und übereinander angeordnete Rahmen (1, 2); wenigstens ein Paar faltbare Arme (5), welche die Rahmen verbinden; und wenigstens zwei steife Montierstützen (20), wobei die faltbaren Arme (5) aus flach strukturierten Elementen in der Form von Scheren bestehen, beruhend auf einem Paar gelenkig verbundener Flachstäbe, wobei die flach strukturierten Elemente die Relativbewegung der Rahmen (1, 2) zwischen Positionen maximalen und minimalen Abstands erlauben; und die steifen Montierstützen (20) sich aus wenigstens zwei teleskopischen Abschnitten (21, 22) zusammensetzen, die an einem Ende mit dem unteren Rahmen (2) entsprechend parallel ausgerichteten Achsen gelenkig verbunden sind und die das Schwenken der Stützen (20) zwischen einer vollständig zusammengelegten Position auf dem oberen Rahmen (1) und einer vertikal montierten Position erlauben, in der sie auf dem unteren Rahmen (2) lasten, wodurch für die Stabilität der Baugruppe bei maximalem Abstand zwischen den Rahmen (1, 2) gesorgt wird, **dadurch gekennzeichnet, daß** er weiterhin eine Reihe von dazwischenliegenden, abnehmbaren Ablagen (18, 51) enthält, die in verschiedenen Höhen zwischen jedem Paar faltbarer Arme (5) montiert sind, und daß einer von jedem Paar Endflachstäben mit seinem freien Ende mit dem angrenzenden Rahmen gelenkig verbunden ist, während der andere entlang der Länge eines Abschnittes des Rahmens verschiebbar ist.

2. Container nach Anspruch 1, **dadurch gekennzeichnet, daß** er auch Paare faltbarer Arme (6) umfaßt, die zwischen oberen und unteren Querträgern (3, 4) der Rahmen (1, 2) montiert sind, wobei die Querträger (3, 4) durch U-förmige Profile dargestellt werden, die entsprechend der Achsen der Rahmen (1, 2) verlaufen.

3. Container nach Anspruch 1, **dadurch gekennzeichnet, daß** die Stützen (20) einen unteren, höhenreduzierten Abschnitt (22) umfassen, welcher an seinem unteren Ende an dem Rahmen (2) befestigt ist, und eine obere teleskopische Stange (21'), welche über eine parallel zu einer der Seiten des Rahmens (2) verlaufende Achse (30) mit dem unteren Abschnitt (22) gelenkig verbunden ist, wobei sie um die Achse (30) geschwenkt werden kann zwischen einer aufgestellten Position, in der sie als Verlängerung des unteren Abschnitts (22) verbleibt, und einer zusammengeklappten Position, in der sie gegen die Innenseite des Gestells in etwa paralleler Position zu einer der Rahmenseiten (1, 2) zusammengelegt wird, wobei beide Abschnitte (21', 22) der teleskopischen Stangen (20) über einen Satz von Hebeln verbunden sind, der die relative Position der Abschnitte kontrolliert und wobei der obere Abschnitt (21') einer jeden Stange (20) an seinem oberen freien Ende und dem oberen Rahmen mit gegenüberstehenden, gegenseitigen Verbindungslementen versehen ist.

4. Container nach Anspruch 3, **dadurch gekennzeichnet, daß** die Stangen (20) in zwei Paaren verbunden sind, wobei der Satz von Hebeln, der die Abschnitte der Stangen verbindet, einen U-förmigen Hebel (32) umfaßt, dessen Seitenzweige (33) über ihr freies Ende mit dem äußeren Abschnitt von jedem Paar verbundener Stangen (20) und einer Schiene (35) zusammengefügt sind, die an einem Ende mit einem mittleren Punkt von einem der Seitenzweige (33) des U-förmigen Hebels und an dem anderen Ende mit dem inneren Abschnitt (21") der angrenzenden teleskopischen Stange (20) gelenkig verbunden ist und wobei die Schienen (35) auf derselben Seite der beiden Stangenpaare (20) eine größere Länge aufweisen als solche auf der gegenüberliegenden Seite, um in jedem Pfostenpaar (20) die inneren Abschnitte (21") in unterschiedlichen Größen zu errichten.

5. Container nach Anspruch 3, **dadurch gekennzeichnet, daß** der untere Abschnitt (22) der Stützen (20) rohrförmig gestaltet ist, mit ausreichendem Durchmesser zur Aufnahme des unteren Teilstücks der korrespondierenden Stange (21'), wobei beide Elemente über einen diametrischen Stift (30) verbunden sind, der als Rotationsachse der Stange (21') dient und der sich über die Länge von entsprechenden axialen Nuten (29) in der Wand des rohrförmigen Abschnitts bewegen kann, wobei die Wand des unteren Abschnitts (22) auch mit einer axialen Einkerbung (31) am oberen Rand versehen ist, mit ungefähr gleicher oder geringfügig größerer Breite als der Durchmesser der Stange (21'), um ein Zusammenlegen des Mastes zu erlauben.

6. Container nach Anspruch 3, **dadurch gekennzeichnet, daß** jedes Paar der koplanaren faltbaren Arme (5) innen mit transversalen Profilen (50) versehen ist, die in jeweils gleicher Höhe auf den zwei Paaren von Armen angeordnet sind, so daß für die Montage der Ablagen (51) eine Führung vorhanden ist.

7. Container nach Anspruch 3, **dadurch gekennzeichnet, daß** die gegenüberstehenden faltbaren Arme (5) über ein Spannungselement (46) verbunden sind, das auf der dazwischenliegenden Seite des unteren Rahmens (2) untergebracht ist und die Stäbe (5) gegen seine ungefaltete Position antreibt.

8. Container nach Anspruch 3, **dadurch gekennzeichnet, daß** am unteren Abschnitt der Stützen (20), die teleskopisch zusammengefügt sind, ausgehend vom unteren Ende ein Bein (42) angeordnet ist, welches in aufsteigender Richtung mittels einer Feder in eine zurückgezogene Position gestoßen wird, wobei die Feder zwischen dem Abschnitt und dem Bein montiert ist und die verbundene Stange (5) auf dem Bein (42) ruht.

9. Container nach Anspruch 1 und 3, **dadurch gekennzeichnet, daß** er an jeder Ecke des Bodens mit einem Bremsunterstützer mit individueller Aktivierung versehen ist, der durch ein Rohr (56) dargestellt wird, das integraler Bestandteil des Rahmens (2) ist, auf dem ein zweites Rohr (42) teleskopartig montiert ist, letzteres versehen mit einem Ansatz (61), auf dem ein ellbogenförmiger Hebel (63) drehbar montiert ist, der an seinem Ende von einem Gleitstück (64) abgeschlossen wird, das auf den Rahmen (2) des Bodens drückt und sich über diesen bewegt, wobei der unterstützende Fuß (47) mittels einer Feder (58) permanent gegen seine obere Position gedrückt wird, wobei die Feder (58) zwischen dem unteren Teil (61) des Rohrs (56) und der Mutter (60) der Schraube (59) montiert ist, die den unterstützenden Fuß (47) befestigt.

## Revendications

1. Conteneur pliable, comprenant:
deux cadres identiques parallèles et superposés (1, 2) ;
au moins une paire de bras pliables (5) qui sont associés auxdits cadres ; et
au moins deux colonnes de montage rigides (20) ;
dans lequel:
les bras pliables (5) consistent en éléments de structure plate de la forme de ciseaux, basés sur une paire de barres plates articulées, lesdits éléments de structure plate permettant le déplacement relatif des cadres (1, 2) à partir de positions de séparation maximum et minimum ; et
les colonnes de montage rigides (20) sont réalisées en au moins deux sections télescopiques (21, 22) qui sont articulées à une extrémité du cadre inférieur (2) suivant des axes parallèles alignés, ce qui permet le basculement desdites colonnes (20) entre une position à partie supérieure repliée sur le cadre supérieur (1) et une position verticale montée, dans laquelle elles portent sur ledit cadre inférieur (2), assurant la stabilité de l'ensemble, les cadres (1, 2) étant dans la situation de séparation maximum ;
**caractérisé en ce qu'**il comprend, en outre,
une série de plateaux intermédiaires amovibles (18, 51) assemblés à différentes hauteurs entre chaque paire de bras pliables (5) ;
et **en ce que**
l'une de chaque paire de barres plates d'extrémité est articulée par son extrémité libre sur le cadre adjacent, alors que l'autre peut coulisser suivant la longueur d'une section dudit cadre.

2. Conteneur selon la revendication 1, **caractérisé en ce qu'**il comprend aussi une paire de bras pliables (6) qui sont assemblés entre des traverses supérieure et inférieure (3, 4) des cadres (1, 2), lesdites traverses (3, 4) étant constituées par des profilés en forme de "U" opposés qui s'étendent suivant les axes desdits cadres (1, 2).

3. Conteneur selon la revendication 1, **caractérisé en ce que** les colonnes (20) comportent une section inférieure de hauteur réduite (22) qui est fixée par son extrémité inférieure au cadre (2), et un pilier télescopique supérieur (21'), qui est articulé sur la section inférieure (22) par un axe (30) parallèle à l'un des côtés du cadre (2), autour de l'axe (30) duquel il peut basculer entre une position montée, dans laquelle il reste en extension par rapport à la section inférieure (22), et une position repliée, dans laquelle il est replié vers l'intérieur du montage dans une position sensiblement parallèle à l'un des côtés du cadre (1, 2) ; les deux sections (21', 22) des piliers télescopiques (20) étant associées par un jeu de leviers qui commande la position relative desdites sections, et la section supérieure (21') de chaque pilier (20) comportant, à son extrémité supérieure libre et sur le cadre supérieur, des éléments de couplage mutuels opposés.

4. Conteneur selon la revendication 3, **caractérisé en ce que** les piliers (20) sont associés en deux paires, le jeu de leviers qui associent les sections desdits piliers comprenant un levier en forme de "U" (32), dont les branches latérales sont articulées par leur extrémité libre sur la section externe de chaque paire de piliers (20) associés, et une barre (35) qui est articulée par une extrémité sur un point intermédiaire de l'une des branches latérales du levier en forme de "U" (32) et par l'autre, sur la section interne d'un pilier télescopique adjacent (20) ; les barres (35) du même côté des deux paires de piliers (20) étant de longueur supérieure à celles du côté opposé, de manière à soulever, dans chaque paire de piliers (20), les sections internes sur différentes hauteurs.

5. Conteneur selon la revendication 3, **caractérisé en ce que** la section inférieure (22) des colonnes (20) est d'une configuration tubulaire avec un diamètre suffisant afin de recevoir la partie inférieure du pilier correspondant (21'), les deux éléments étant associés par une broche diamétrale (30) qui sert d'axe de rotation du pilier (21') et qui peut se déplacer suivant la longueur de rainures axiales (29) respectives que présente la section tubulaire sur sa paroi, la paroi de ladite section inférieure (22) comportant aussi, tel qu'à partir du bord supérieur, une encoche axiale (31) de largeur sensiblement identique ou légèrement supérieure au diamètre du pilier (21'), afin de permettre le pliage dudit élément de colonne.

6. Conteneur selon la revendication 3, **caractérisé en ce que** chaque paire de bras pliables coplanaires (5) comporte, de manière intégrée, des profils transversaux (50) placés à une hauteur identique sur les deux paires de bras (5) afin de déterminer des guides pour l'assemblage de plateaux (51).

7. Conteneur selon la revendication 3, **caractérisé en ce que** les bras pliables opposés (5) sont associés par un élément de traction (46) logé sur le côté intermédiaire du cadre inférieur (2), qui applique lesdits bras (5) vers leur position dépliée.

8. Conteneur selon la revendication 3, **caractérisé en ce que** sur la section inférieure des colonnes (20) est assemblée de manière télescopique ensemble, se séparant de son extrémité inférieure, une patte (42) qui est appliquée en direction ascendante vers une position rétractée au moyen d'un ressort assemblé entre lesdites section et patte, le pilier associé (20) reposant sur ladite patte (42).

9. Conteneur selon les revendications 1 et 3, **caractérisé en ce qu'**il comporte, à chaque angle de la base, un support de frein à activation individuelle, constitué par un tube (56) formant une seule pièce avec le cadre (2), sur lequel un second tube (42) est assemblé de manière télescopique, comportant une saillie (62) sur laquelle un levier coudé (63) est assemblé de manière à pouvoir tourner, se terminant à son extrémité par un coulisseau (64) qui repose et se déplace sur le cadre de base (2), le pied de support (47) étant appliqué en permanence vers sa position supérieure au moyen d'un ressort (58) assemblé entre la partie inférieure (61) du tube (56), et l'écrou (60) de la vis (59) qui fixe le pied support (47).
